# EUROPEAN PATENT SPECIFICATION

(11) **EP 1 338 066 B1**
(45) Date of publication and mention of the grant of the patent: **06.01.2010**
(21) Application number: 00979669.9
(22) Date of filing: 30.11.2000
(51) Int. Cl.: H02H 1/00, G01R 19/25

(54) **AN IMPROVED DIGITAL PROTECTION AND CONTROL DEVICE**
VERBESSERTE DIGITALE SCHUTZ- UND REGELUNGSVORRICHTUNG
DISPOSITIF NUMERIQUE DE COMMANDE ET DE PROTECTION AMELIORE

(43) Date of publication of application: 27.08.2003
(73) Proprietor: ABB Technology AG, 8050 Zürich (CH)
(72) Inventor: GATELLI, Fabio, I-25021 Bagnolo-Mella (IT); DI MAIO, Luciano, I-20162 Milano (IT)
(74) Representative: Giavarini, Francesco
(86) International application number: PCT/EP2000/012307
(87) International publication number: WO 2002/045228

(56) References cited:
- PATENT ABSTRACTS OF JAPAN vol. 1999, no. 02, 26 February 1999 (1999-02-26) & JP 10 304551 A (TOSHIBA CORP), 13 November 1998 (1998-11-13)

## Description

The present invention relates to an improved digital protection and control (P&C) device for a power distribution line.

It is known that a digital P&C device is devoted to accomplish with various tasks. An important function of a digital P&C device is to monitor the operating state of a power distribution line. Another relevant task of a digital P&C device consists of the control of the operation of primary equipment (for example tripping devices or disconnectors or the like) of the power distribution line, depending on the results of the monitoring activity.

A traditional digital P&C device generally comprises primary transducer means, placed on a power distribution line and connected, through analog signal channels, to a control unit.

The primary transducer means provide in output one or more analog signals, indicative of the values of predefined physical quantities (e.g. voltage and current) related to the power distribution line. First, these analog signals are sent to secondary transformer means, placed downstream the primary transducer means and externally to the control unit. The, the secondary transformer means provide the control unit, still by means of predefined analog channels, with analog signals having amplitude suitable for an electronic processing.

The control unit generally comprises a main board, which includes analog to digital (A/D) converter means that convert the analog signals provided by the secondary transducer means into digital signals. The main board comprises also a digital signal processor (DSP), which communicates with a microcontroller and receives these digital signals. Thus, the acquired data/information are processed by the DSP and the microprocessor can provide for the digital generation of signals for regulating the operation of the digital P&C device.

Traditional digital P&C devices have some drawbacks.

A first drawback is represented by the fact that the signals, which reach the control unit, are often provided with a relatively "low energy" content and are characterized by a relatively low signal/noise ratio. Because these analog signals have to be transmitted for relatively long distances, they are very often subjected to electromagnetic disturbances, due, for example, to capacitive and/or inductive couplings between the analog signal channels or the analog signal channels and the ground. Further, due to the "low energy" content of the input analog signals, high quality and very expensive connectors have often to be used in order to for couple the mentioned analog channels to the control unit.

Moreover, in traditional digital P&C devices, it is quite difficult to adopt, as primary transducer means, non-conventional transducers such as, for example, Rogowski coils, voltage dividers and the like. These transducers are able to provide analog signals, which do not need a reduction of the amplitude. Thus, very often, the use of non-conventional primary transducer means requires the change of the set up of the secondary transformer means, which often have to be completely substituted. Obviously, this implies higher installation and operation costs. Further, each time that secondary transformer means are changed or modified, it is necessary to recalibrate, on the field, the A/D conversion means. This operation is quite time consuming and required the intervention of trained personnel, due to the fact that the calibration of the A/D conversion chain influences remarkably the whole performances of the digital P&C device. Eventually, due to the drawbacks described above, one can state that traditional P&C devices do not provide satisfactory performances in terms of reliability, flexibility and installation/operation costs, yet.

Therefore, the main aim of the present invention is to provide a digital P&C device, which allows overcoming the drawbacks mentioned above and which is able to provide satisfactory performances in terms of operation accuracy, reliability, flexibility and installation/operation costs.

Thus, the present invention provides a digital P&C device for a power distribution line comprising:
- primary transducer means, placed on the power distribution line, which provide in output one or more first analog signals, indicative of the values of predefined physical quantities, related to the power distribution line; and
- a control unit, which receives in input these one or more first analog signals and which comprises a microcontroller, a DSP communicating with said microcontroller and A/D conversion means communicating with said DSP.

The digital P&C device, according to the present invention, is characterized in that the mentioned control unit comprises at least a first electronic stage, which receives in input said one or more first analog signals and provides in output one or more first digital signals. The first electronic stage comprises pre-conditioning means, which receive in input said one or more first analog signals and provide in output one or more second analog signals. The first electronic stage comprises also said A/D conversion means, which receive in input said one or more second analog signals and provide in output said one or more first digital signals. Further, the mentioned control unit comprises a second electronic stage, which comprises said microcontroller and DSP. This second electronic stage receives in input said one or more first digital signals and executes the processing of said one or more first digital signals.

Further characteristics and advantages of the digital P&C device, according to the present invention will be better described hereinafter, with particular reference to the enclosed figures, in which:
figure 1, schematically illustrates a block diagram representing the digital P&C device, according to the present invention;
figure 2 schematically illustrates a block diagram represent a detail of the digital P&C device, according to the present invention.

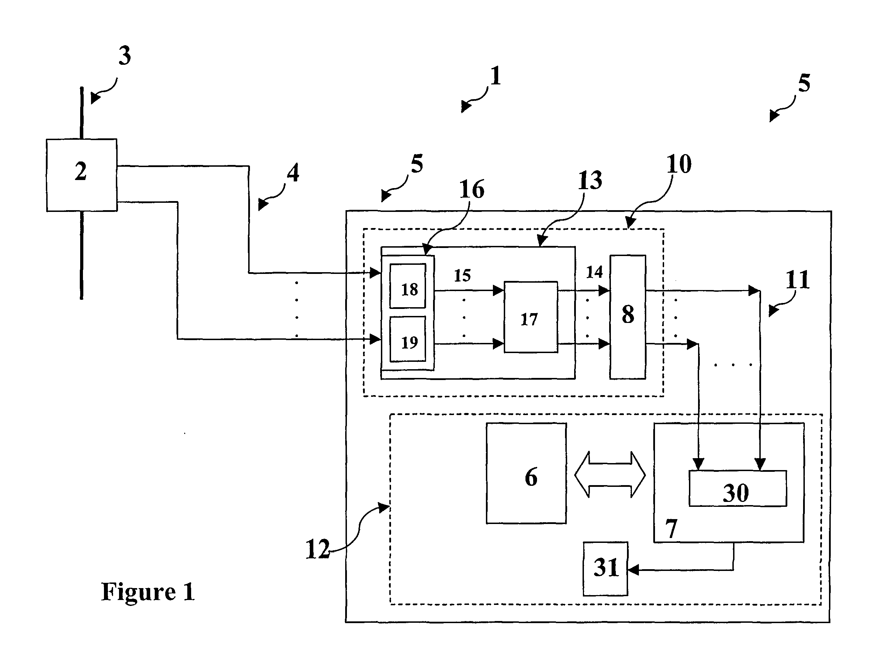

Referring to figure 1, the digital P&C device 1, according to the present invention, comprises primary transducer means 2, placed on a power distribution line 3. The transducer means 2 provide in output one or more first analog signals 4 that are indicative of the values of predefined physical quantities (e.g. current and/or voltage) related to the power distribution line 3. The transducer means 2 may comprise, for example, conventional current or voltage sensors (e.g. current or voltage transformers) or, alternatively, non-conventional current or voltage sensors (e.g. Rogowski coils or voltage dividers).

The digital P&C device 1 comprises also a control unit 5, which receives in input the first analog signals 4. The control unit 5 comprises a microcontroller 6, a DSP 7, communicating with the microcontroller 6, and A/D conversion means 8 communicating with the DSP 7. The control unit 5 comprises a first electronic stage 10, which receives in input the first analog signals 4 and provides in output one or more first digital signals 11. Further, the control unit 5 comprises a second electronic stage 12, which receives in input and processes the first digital signals 11. The first electronic stage 10, which advantageously is realized on a first dedicated electronic board (not shown), comprises pre-conditioning means 13, which receive in input the first analog signals 4 and provide in output or more second analog signals 14. The first electronic stage 10 comprises also the A/D conversion means 8, which receive in input said the second analog signals 14 and provide in output the first digital signals 11. The second electronic stage 12, which is advantageously realized on a second dedicated electronic board (not shown), separated from said first electronic board, comprises the microcontroller 6 and the DSP 7. Preferably, the first digital signals 11 are transmitted by means of an intermediate electronic stage (not shown). This intermediate electronic stage communicates with the first electronic stage 10 and the second electronic stage 12. The intermediate stage receives in input the first digital signals 11 and transmits them to the second electronic stage 12.

The intermediate electronic stage may be realized on an intermediate electronic board (not shown) such as, for example, a back-plane communication board. This back-plane communicating board is preferably connected interposed between the mentioned first and second electronic boards. Preferably, the pre-conditioning means comprise an adaptation circuit 16, which receives in input the first analog signals 4 and provides in output one or more third analog signals 15, having amplitude suitable to be electronically processed. Further, the pre-conditioning means 13 may comprise also a filter circuit 17, which receives in input the third analog signals 15 and provides in output the second analog signals 14, which are, at this point, ready for the A/D conversion.

Preferably, the adaptation circuit 16 comprises a first circuit block 18, which comprises advantageously secondary transformer means (not shown), which receives a first portion (not shown) of analog signals 4, sent by conventional sensors, included in the transducer means 2. Particularly, the secondary transformer means are aimed at reducing the amplitude of this portion of the analog signals 4. In parallel to the first circuit block 18, a second circuit block 19 is advantageously included in the adaptation circuit 16. The second circuit block 19 is aimed at receiving a second portion (not shown) of analog signals 4, sent by non-conventional sensors, included in the transducer means 2, and preferably comprises amplification circuits (not shown) for improving the quality of the received portion of analog signals 4.

Preferably, the filter circuit 17 comprises one or more anti-aliasing filters, which provide in output the second analog signals 14 that are provided with an improved spectral content.

The advantages of the configuration of the first electronic stage 10 should be noticed. The first analog signals are brought directly into the control unit 5. Inside the control unit, the analog signals 4 are pre-conditioned and filtered, before being sent to the DSP. In this manner, the effects of electromagnetic disturbs are remarkably reduced and the signal/noise ratio of the transmitted analog signals is fairly enhanced. Also, the use of expensive and high quality connectors may be avoided. These results are mainly achieved, due to the fact that relatively "high energy" signals (i.e. the first analog signals 4 that are not conditioned before reaching the control unit 5) are transmitted for relatively long distances. "Low energy" analog signals (e.g. the second or the third analog signals 15 and 14) are transmitted only for very shirt distances, internally to the pre-conditioning means 13.

Further, the control unit 5, thanks to the use of the adaptation circuit 16, can be connected to both conventional and non-conventional sensors, without the need of set-up changes. In practice, the adoption of the pre-conditioning means 13 makes the control unit 5 suitable to be connected to different kinds of primary transducer means. During the installation of the control unit 5, one has only to choose the correct input analog channels.

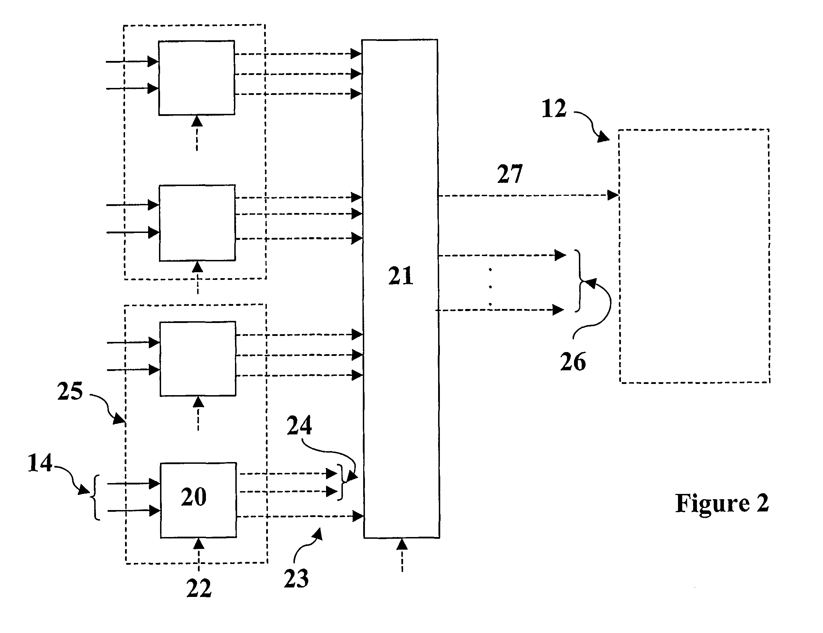

Referring now to figure 2, a block diagram, related to the A/D converting means 8, is schematically illustrated.

The A/D converter means 8 comprise preferably one or more A/D converters 20, which communicate with a digital combinatory circuit 21 that provides in output the first digital signals 11. The converters 20 may comprise, for example, 2-channel A/D converters, preferably of the sigma-delta type (normally used for digital audio applications). Preferably, the converters 20 receive in input a couple of the second analog signals 14 and a clock signal 22 and provides in output a digital data signal 23 and a couple of digital control signals 24.

The clock signal 22 may be advantageously the signal, which is used for determine the sampling frequency of each A/D converter 20, and may be provided directly by the DSP. In an advantageous embodiment of the present invention, the A/D converters 20 may be organized in a plurality of couples 25, advantageously hardware configured according to a master-slave mode. In this case, the first digital signals 11, provided in output by the digital combinatory circuit 21, comprise one or more digital data-signals 26. Each of the signals 26 corresponds advantageously to a couple of A/D converters 25. Further, the first digital signals 11 comprise also at least a digital control signal 27 for controlling the data-acquisition operation of the DSP 7.

The whole configuration for the first electronic stage 10 is particularly advantageous, since it allows achieving a high level of flexibility of the digital P&C device 1, according to the present invention.

In fact, the number of analog channels in input to the control unit 5 might be enhanced, according to the needs. Due to the fact that the analog pre-processing is performed uniquely in the first stage 10, it is possible to set up a plurality of parallel first electronic boards, each including a first electronic stage 10. These parallel first electronic boards may be multiplexed with the second electronic stage 12, which is included in a fully digital second electronic board (i.e. an electronic board with digital inputs and outputs, only). Further, the speed and the efficiency of the A/D conversion chain may be varied, according to the needs, thanks to the modular configuration of the A/D conversion means 8.

It should be noticed that the rejection to external electromagnetic disturbances is further improved. In fact, between the first and the second electronic stage, only digital signals, less sensitive to electromagnetic interferences, are transmitted. Referring again to figure 1, in a preferred embodiment of the present invention, the DSP 7 comprises preferably a digital interface circuit 30. The digital interface 30, which advantageously comprises a plurality of so-called ESSI (Enhanced Serial Synchronous Interface) ports, receives in input the first digital signals 11 and provides in output one or more second digital signals (not shown), whose information content is finally processed by the DSP and the microcontroller. The use of the digital interface 30 allows improving the transmission of digital signals to the DSP.

In a further preferred embodiment of the present invention, the second electronic stage 12 may be provided with non-volatile storage means 31 (e.g. an EEPROM memory) for storing predefined calibration data/information (not shown), such as, for example, calibration parameters and/or manufacturing board information. These calibration data/information may be accessed and processed directly by the DSP 7 and/or by the microcontroller 6 for equalizing the A/D converter means 8. This solution is particularly advantageous, since it allows executing a board calibration procedure during the factory tests (for example at different frequencies or at different operative temperatures) and storing permanently the calibration data/information, set in this calibration procedure, in the storage means 31.

At the start up of the digital P&C device 1, the DSP 7 and/or the microcontroller 6 can acquire automatically the calibration data/information and, accordingly, they can calibrate/equalize the A/D converter means 8. In this manner, calibrations of the field are definitely avoided.

The digital P&C device 1, according to the present invention, has shown to achieve, in practice, the intended aims and objects.

In particular, the digital P&C device 1, according to the present invention, has proven to ensure improved performances of the digital P&C device, particularly in terms of operation accuracy and safety.

Further, the digital P&C device 1 according to the present invention, has demonstrated a high reliability and high flexibility of use, which have allow to remarkably reduce its installation and operation costs.

Finally, the digital P&C device, according to the present invention, has proven, in practice, to be of easy realization and at competitive costs.

## Claims

1. A digital power and control (P&C) device for a power distribution line (3) comprising:
- primary transducer means (2), placed on said power distribution line, which provide in output one or more first analog signals (4), indicative of the values of predefined physical quantities related to said power distribution line; and
- a control unit (5), which receives in input said one or more first analog signals (4) and which comprises a microcontroller (6), a digital signal processor (7) communicating with said microcontroller and A/D conversion means (8) communicating with said digital signal processor (7);
**characterized in that** said control unit comprises:
- at least a first electronic stage (10), which receives in input said one or more first analog signals and provides in output one or more first digital signals (11), said first electronic stage comprising pre-conditioning means (13), which receive in input said one or more first analog signals and provide in output one or more second analog signals (14), and said A/D conversion means, which receive in input said one or more second analog signals and provide in output said one or more first digital signals; and
- a second electronic stage (12), which receives in input said one or more first digital signals and processes said one or more first digital signals, said second electronic stage comprising said microcontroller and said digital signal processor (7).

2. A digital P&C device, according to claim 1, **characterized in that** said control unit comprises an intermediate electronic stage, which communicates with said first electronic stage and said second electronic stage, said intermediate stage receiving in input said one or more first digital signals and transmitting said one or more first digital signals to said second electronic stage.

3. A digital P&C device, according to one or more of the previous claims, **characterized in that** said pre-conditioning means comprise:
- an adaptation circuit, which receives in input said one or more first analog signals and provides in output one or more third analog signals, suitable to be electronically processed; and
- a filter circuit, which receives in input said one or more third analog signals and provides in output one or more second analog signals.

4. A digital P&C device, according to claim 3, **characterized in that** said adaptation circuit comprises:
- a first block circuit for receiving and processing a first portion of said first analog signals, which is sent by conventional sensors; and
- a second block circuit for receiving and processing a second portion of said first analog signals, which is sent by non-conventional sensors.

5. A digital P&C device, according to one or more of the previous claims, **characterized in that** said A/D conversion means comprise a one or more A/D converters, which communicate with a digital combinatory circuit, which provides in output said one or more first digital signals.

6. A digital P&C device, according to claim 5, **characterized in that** one or more of said A/D converters receive in input a couple of said second analog signals and a clock signal and provides in output a digital data signal and a couple of digital control signals.

7. A digital P&C device, according to claim 6, **characterized in that** said clock signal is provided by said DSP.

8. A digital P&C device, according to claims from 5 to 7, **characterized in that** said A/D conversion means comprise one or more couples of A/D converters, each couple of A/D converters being configured, according to a master-slave mode.

9. A digital P&C device, according to claims from 5 to 8, **characterized in** the first digital signals, which are provided in output by said digital combinatory circuit, comprise:
- one or more digital data-signals, each of said digital data signal corresponding to one couple of A/D converters; and
- at least a digital control signal for controlling the data-acquisition operation of said DSP.

10. A digital P&C device, according to one or more of the claims from 5 to 9, **characterized in that** said A/D converters are 2-channel sigma-delta A/D converters.

11. A digital P&C device, according to one or more of the previous claims, **characterized in that** said DSP comprises a digital interface circuit, which receives in input said one or more first digital signals and which provides in output one or more second digital signals.

12. A digital P&C device, according to one or more of the previous claims, **characterized in that** said second electronic stage comprises non-volatile storage means for storing calibration data/information.

13. A digital P&C device, according to claim 12, **characterized in that** said DSP and/or said microcontroller are capable to access and process said calibration data/information for equalizing said A/D converter means.

14. A digital P&C device, according to one or more of the previous claims, **characterized in that** said electronic stage is realized on a first electronic board and **in that** said second electronic stage is realized on a second electronic board, separated from said first electronic board.

15. A digital P&C device, according to one or more of previous claims, **characterized in that** said intermediate electronic stage is realized on an intermediate communication board, which is connected between said first electronic board and said second electronic board.

## Patentansprüche

1. Digitale Schutz- und Steuer- (P&C-) Einrichtung für eine Leistungsverteilungsleitung (3), aufweisend:
- primäre Wandlermittel (2), die an der Leistungsverteilungsleitung angeordnet sind und die als Ausgang eines oder mehrere erste analoge Signale (4) liefern, welche die Werte von vordefinierten physikalischen Größen angeben, die mit der Leistungsverteilungsleitung in Beziehung stehen; und
- eine Steuereinheit (5), die als Eingang das eine oder die mehreren ersten analogen Signale (4) empfängt und die einen Mikrocontroller (6), einen digitalen Signalprozessor (7), der mit dem Mikrocontroller kommuniziert, und A/D-Wandlungsmittel (8), die mit dem digitalen Signalprozessor (7) kommunizieren, aufweist
**dadurch gekennzeichnet, dass** die Steuereinheit aufweist:
- mindestens eine erste elektronische Stufe (10), die als Eingang das eine oder die mehreren ersten analogen Signale empfängt und als Ausgang eines oder mehrere erste digitale Signale (11) liefert, wobei die erste elektronische Stufe Vorbehandlungsmittel (13) aufweist, die als Eingang das eine oder die mehreren ersten analogen Signale empfangen und als Ausgang eines oder mehrere zweite analoge Signale (14) liefern, sowie die Analog/Digital-Wandlungsmittel aufweist, die als Eingang das eine oder die mehreren zweiten analogen Signale empfangen und als Ausgang das eine oder die mehreren ersten digitalen Signale ausgeben; und
- eine zweite elektronische Stufe (12), die als Eingang eines oder mehrere erste digitale Signale empfängt und das eine oder die mehreren ersten digitalen Signale verarbeitet, wobei die zweite elektronische Stufe den Mikrocontroller und den digitalen Signalprozessor (7) aufweist.

2. Digitale P&C-Vorrichtung nach Anspruch 1, **dadurch gekennzeichnet, dass** die Steuereinheit eine elektronische Zwischenstufe aufweist, die mit der ersten elektronischen Stufe und der zweiten elektronischen Stufe kommuniziert, wobei die Zwischenstufe als Eingang das eine oder die mehreren ersten digitalen Signale empfängt und das eine oder die mehreren ersten digitalen Signale an die zweite elektronische Stufe übermittelt.

3. Digitale P&C-Vorrichtung nach einem oder mehreren der vorangehenden Ansprüche, **dadurch gekennzeichnet, dass** die Vorbehandlungsmittel aufweisen:
- eine Anpassungsschaltung, die als Eingang das eine oder die mehreren ersten analogen Signale empfängt und als Ausgang eines oder mehrere dritte analoge Signale liefert, die sich für eine elektronische Verarbeitung eignen; und
- eine Filterschaltung, die als Eingang das eine oder die mehreren dritten analogen Signale empfängt und als Ausgang eines oder mehrere zweite analoge Signale liefert.

4. Digitale P&C-Vorrichtung nach Anspruch 3, **dadurch gekennzeichnet, dass** die Anpassungsschaltung aufweist:
- eine erste Blockschaltung zum Empfangen und Verarbeiten eines ersten Teils der ersten analogen Signale, der von standardgemäßen Sensoren gesendet wird; und
- eine Blockschaltung zum Empfangen und Verarbeiten eines zweiten Teils der ersten analogen Signale, der von nicht-standardgemäßen Sensoren gesendet wird.

5. Digitale P&C-Vorrichtung nach einem oder mehreren der vorangehenden Ansprüche, **dadurch gekennzeichnet, dass** die A/D-Wandlungsmittel einen oder mehrere A/D-Wandler umfassen, der bzw. die mit einer digitalen kombinatorischen Schaltung, die als Ausgang das eine oder die mehrere digitalen Signale liefert, kommuniziert bzw. kommunizieren.

6. Digitale P&C-Vorrichtung nach Anspruch 5, **dadurch gekennzeichnet, dass** der eine oder die mehreren A/D-Wandler als Eingang ein Paar aus den zweiten analogen Signalen und ein Taktsignal empfängt bzw. empfangen und als Ausgang ein digitales Datensignal und ein Paar aus digitalen Steuersignalen liefert bzw. liefern.

7. Digitale P&C-Vorrichtung nach Anspruch 6, **dadurch gekennzeichnet, dass** das Taktsignal vom DSP geliefert wird.

8. Digitale P&C-Vorrichtung nach den Ansprüchen 5 bis 7, **dadurch gekennzeichnet, dass** die A/D-Wandlungsmittel ein oder mehrere Paare aus A/D-Wandlern aufweisen, wobei jedes Paar aus A/D-Wandlern gemäß einem Master/Slave-Modus konfiguriert ist.

9. Digitale P&C-Vorrichtung nach den Ansprüchen 5 bis 8, **dadurch gekennzeichnet, dass** die ersten digitalen Signale, die als Ausgang von der digitalen kombinatorischen Schaltung geliefert werden, umfassen:
- eines oder mehrere digitale Datensignale, wobei jedes der digitalen Datensignale einem Paar aus A/D-Wandlern entspricht; und
- mindestens ein digitales Steuersignal zum Steuern der Datenermittlungsoperation des DSP.

10. Digitale P&C-Vorrichtung nach einem oder mehreren der Ansprüche 5 bis 9, **dadurch gekennzeichnet, dass** die A/D-Wandler 2-kanalige sigma/delta-A/D-Wandler sind.

11. Digitale P&C-Vorrichtung nach einem oder mehreren der vorangehenden Ansprüche, **dadurch gekennzeichnet, dass** der DSP eine digitale Schnittstellenschaltung umfasst, die als Eingang das eine oder die mehreren ersten digitalen Signale empfängt und die als Ausgang eines oder mehrere zweite digitale Signale liefert.

12. Digitale P&C-Vorrichtung nach einem oder mehreren der vorangehenden Ansprüche, **dadurch gekennzeichnet, dass** die zweite elektronische Stufe ein nicht-flüchtiges Speichermittel zum Speichern von Kalibrierungsdaten/Informationen aufweist.

13. Digitale P&C-Vorrichtung nach Anspruch 12, **dadurch gekennzeichnet, dass** der DSP und/oder der Mikrocontroller in der Lage ist bzw. sind, auf die Kalibrierungsdaten/Informationen zuzugreifen und die Kalibrierungsdaten/Informationen zu verarbeiten, um die A/D-Wandlungsmittel auszugleichen.

14. Digitale P&C-Vorrichtung nach einem oder mehreren der vorangehenden Ansprüche, **dadurch gekennzeichnet, dass** die elektronische Stufe an einer ersten elektronischen Platine realisiert wird und dass die zweite elektronische Stufe an einer zweiten elektronischen Platine realisiert wird, die von der ersten elektronischen Platine getrennt ist.

15. Digitale P&C-Vorrichtung nach einem oder mehreren der vorangehenden Ansprüche, **dadurch gekennzeichnet, dass** die elektronische Zwischenstufe an einer Zwischen-Kommunikationsplatine, die zwischen die erste elektronische Platine und die zweite elektronische Platine geschaltet ist, realisiert ist.

## Revendications

1. Dispositif numérique de puissance et de commande (P&C) pour une ligne de distribution d'énergie (3) comprenant :
- des moyens formant transducteur primaire (2), placés sur ladite ligne de distribution d'énergie, lesquels fournissent en sortie un ou plusieurs premiers signaux analogiques (4), indiquant les valeurs de grandeurs physiques prédéfinies concernant ladite ligne de distribution d'énergie ; et
- une unité de commande (5), qui reçoit en entrée lesdits un ou plusieurs premiers signaux analogiques (4) et qui comprend un microcontrôleur (6), un processeur de signal numérique (7) communiquant avec ledit microcontrôleur et des moyens formant convertisseur A/N (8) communiquant avec ledit processeur de signal numérique (7) ;
**caractérisé en ce que** ladite unité de commande comprend :
- au moins un premier étage électronique (10), qui reçoit en entrée lesdits un ou plusieurs premiers signaux analogiques et qui fournit en sortie un ou plusieurs premiers signaux numériques (11), ledit premier étage électronique comprenant des moyens de pré-conditionnement (13), qui reçoivent en entrée lesdits un ou plusieurs premiers signaux analogiques et qui fournissent en sortie un ou plusieurs deuxièmes signaux analogiques (14), et lesdits moyens de conversion A/N, qui reçoivent en entrée lesdits un ou plusieurs deuxièmes signaux analogiques et qui fournissent en sortie lesdits un ou plusieurs premiers signaux numériques ; et
- un deuxième étage électronique (12), qui reçoit en entrée lesdits un ou plusieurs premiers signaux numériques et qui traite lesdits un ou plusieurs premiers signaux numériques, ledit deuxième étage électronique comprenant ledit microcontrôleur et ledit processeur de signal numérique (7).

2. Dispositif P&C numérique selon la revendication 1, **caractérisé en ce que** ladite unité de commande comprend un étage électronique intermédiaire, qui communique avec ledit premier étage électronique et ledit deuxième étage électronique, ledit étage intermédiaire recevant en entrée lesdits un ou plusieurs premiers signaux numériques et transmettant lesdits un ou plusieurs premiers signaux numériques audit deuxième étage électronique.

3. Dispositif P&C numérique selon une ou plusieurs des revendications précédentes, **caractérisé en ce que** lesdits moyens de pré-conditionnement comprennent :
- un circuit d'adaptation, qui reçoit en entrée lesdits un ou plusieurs premiers signaux analogiques et fournit en sortie un ou plusieurs troisièmes signaux analogiques, adaptés pour traitement électronique ; et
- un circuit formant filtre, qui reçoit en entrée lesdits un ou plusieurs troisièmes signaux analogiques et qui fournit en sortie un ou plusieurs deuxièmes signaux analogiques.

4. Dispositif P&C numérique selon la revendication 3, **caractérisé en ce que** ledit circuit d'adaptation comprend :
- un premier circuit sous forme de blocs pour recevoir et traiter une première partie desdits premiers signaux analogiques, qui est émise par des capteurs traditionnels ; et
- un deuxième circuit sous forme de blocs pour recevoir et traiter une deuxième partie desdits premiers signaux analogiques, qui est émise par des capteurs non-traditionnels.

5. Dispositif P&C numérique selon une ou plusieurs des revendications précédentes, **caractérisé en ce que** lesdits moyens de conversion A/N comprennent un ou plusieurs convertisseurs A/N, qui communiquent avec un circuit combinatoire numérique, qui fournit en sortie lesdits un ou plusieurs premiers signaux numériques.

6. Dispositif P&C selon la revendication 5, **caractérisé en ce qu'**un ou plusieurs desdits convertisseurs A/N reçoit en entrée une paire desdits deuxièmes signaux analogiques ainsi qu'un signal d'horloge et fournit en sortie un signal de données numériques ainsi qu'une paire de signaux de commande numériques.

7. Dispositif P&C numérique selon la revendication 6, **caractérisé en ce que** ledit signal d'horloge est fourni par ledit processeur de signal numérique.

8. Dispositif P&C numérique selon les revendications 5 à 7, **caractérisé en ce que** lesdits moyens de conversion A/N comprennent une ou plusieurs paires de convertisseurs A/N, chaque paire de convertisseurs A/N étant configurée suivant un mode maître-esclave.

9. Dispositif P&C numérique selon les revendications 5 à 8, **caractérisé en ce que** les premiers signaux numériques qui sont fournis en sortie par ledit circuit combinatoire numérique comprennent :
- un ou plusieurs signaux de données numériques, chacun desdits signaux de données numériques correspondant à une paire de convertisseurs A/N , et
- au moins un signal de commande numérique pour commander l'opération d'acquisition de données dudit processeur de signal numérique.

10. Dispositif P&C numérique selon une ou plusieurs des revendications 5 à 9, **caractérisé en ce que** lesdits convertisseurs A/N sont des convertisseurs A/N sigma-delta à deux voies.

11. Dispositif P&C numérique selon une ou plusieurs des revendications précédentes, **caractérisé en ce que** ledit processeur de signal numérique comprend un circuit formant interface numérique, qui reçoit en entrée lesdits un ou plusieurs premiers signaux numériques et qui fournit en sortie un ou plusieurs deuxièmes signaux numériques.

12. Dispositif P&C numérique selon une ou plusieurs des revendications précédentes, **caractérisé en ce que** ledit deuxième étage électronique comprend des moyens de stockage non-volatile pour le stockage de données/informations d'étalonnage.

13. Dispositif P&C numérique selon la revendication 12, **caractérisé en ce que** ledit processeur de signal numérique et/ou ledit microcontrôleur sont capables d'accéder à et de traiter lesdites données/informations d'étalonnage pour l'égalisation desdits moyens formant convertisseur A/N.

14. Dispositif P&C numérique selon une ou plusieurs des revendications précédentes, **caractérisé en ce que** ledit étage électronique est réalisé sur une première carte électronique et **en ce que** ledit deuxième étage électronique est réalisé sur une deuxième carte électronique, séparée de ladite première carte électronique.

15. Dispositif P&C numérique selon une ou plusieurs des revendications précédentes, **caractérisé en ce que** ledit étage électronique intermédiaire est réalisé sur une carte de communication intermédiaire, qui est connectée entre ladite première carte électronique et ladite deuxième carte électronique.
